# EUROPEAN PATENT APPLICATION

(11) **EP 3 863 146 A1**
(43) Date of publication of application: **11.08.2021**
(21) Application number: 20155538.0
(22) Date of filing: 05.02.2020
(51) Int. Cl.: H02J 7/34, E21F 17/06, B60L 50/53, B65H 75/34, H02J 7/00

(54) **ARRANGEMENT, ELECTRICALLY OPERATED MINE MACHINE AND METHOD**

(71) Applicant: Sandvik Mining and Construction Oy, 33330 Tampere (FI)
(72) Inventor: KITULA, Mikko, 33300 Tampere (FI)
(74) Representative: Sandvik

(57) **Abstract**

An arrangement (100), a machine and a method in a mine. The arrangement comprises an electrically operated mine machine (1), comprising an energy storage (2) for storing electric energy and having capacity for energizing operations of the mine machine (1). The arrangement (100) further comprises a cable (3) for supplying electric energy from an electrical network of the mine (N) to the energy storage (2), and a cable reel module (4) that is stationary arranged in the mine, provided with an arrangement (5) for electric connection in the electrical network of the mine (N) and equipped with a cable reel (6) for winding, unwinding and storing of the cable (3). The cable reel module (4) is arranged to provide electric energy for the mine machine (1) during transfer of said machine (1) for energizing said transfer and for charging the energy storage (2) of said mine machine (1) .

## Description

### BACKGROUND

The invention relates to an arrangement in a mine, comprising an electrically operated mine machine.

The invention further relates to an electrically operated mine machine.

The invention still further relates to a method for using a mine machine.

Electrically-operated mine machines are becoming increasingly common. However, their charging in the mine has some drawbacks.

### BRIEF DESCRIPTION

Viewed from a first aspect, there can be provided an arrangement in a mine, comprising an electrically operated mine machine, the machine comprising
- an energy storage for storing electric energy and having capacity for energizing operations of the mine machine, the arrangement further comprising:
   - a cable for supplying electric energy from an electrical network of the mine to the energy storage,
   - an electric connector arranged in the mine machine for detachably connecting the cable to an electrical system of the mine machine, the arrangement further comprising
   - a cable reel module that is stationary arranged in the mine, provided with an arrangement for electric connection in the electrical network of the mine and equipped with a cable reel for winding, unwinding and storing of the cable, the cable reel module comprising a frame structure suitable for fitting said module to another module of a module system, wherein
   - the mine machine is equipped with a cable fixing means for detachably fixing the cable to said machine, and
   - the cable reel module being arranged to provide electric energy for the mine machine during transfer of said machine for energizing said transfer and for charging the energy storage of said mine machine.

Thereby an arrangement allowing charging of energy storage of an electrically driven mine machine during working and transferring thereof may be achieved. Due to this separate charging breaks may be avoided, and also it is possible to avoid quick or boost charging that would stress the electrical network of the mine.

Viewed from a further aspect, there can be provided an electrically operated mine machine, comprising
- an energy storage for storing electric energy and having capacity for energizing at least mobility operations of the mine machine
- an electric connector for detachably connecting a cable for supplying electric energy from an electrical network of the mine to the energy storage, wherein the electrically operated mine machine further comprises
- a cable fixing means for detachably fixing the cable to the mine machine, and for carrying stresses caused by the cable to the mine machine during transfer of said mine machine,
- a control unit arranged to guide electric energy received from the cable during said transfer for energizing said transfer and for charging the energy storage.

Thereby an electrically operated mine machine having high efficiency may be achieved.

Viewed from a still further aspect, there can be provided a method for using a mine machine, the method comprising:
- arranging a cable reel module stationary in a mine, the cable reel module provided with an arrangement for electric connection in the electrical network of the mine and equipped with a cable reel for winding, unwinding and storing of a cable,
- connecting an electrically operated mine machine to the cable,
- supplying electric energy from the electrical network of the mine to an energy storage of said mine machine by said cable, and
- during transfer of said machine, providing electric energy through the cable for energizing said transfer and for charging the energy storage of said mine machine.

Thereby a method having high output capacity may be achieved.

The arrangement, machine and the method are characterised by what is stated in the independent claims. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

In one embodiment, the cable reel module is provided with an arrangement for electric connection of the cable to the electrical network of the mine. An advantage is that the cable may be connected directly to the network.

In one embodiment, the cable reel module comprises attachment means, by which the cable reel module is arranged detachably to the mine. An advantage is that the cable reel module may be moved away, e.g. for maintenance or repair.

In one embodiment, the attachment means comprises module attachment means for attaching the cable reel module detachably to another functional module in the mine. An advantage is that the cable reel module may be a part of a module system creating various functions in the mine.

In one embodiment, charging means transforming the voltage suitable for the mine machine is arranged in a power module that comprises electrical connections to the electrical network of the mine and to the cable arranged in the reel module. An advantage is that the modular structure of the arrangement provides easy replacement of functions to be overhauled or repaired.

In one embodiment, the arrangement comprises at least one roll arrangement arranged in an external corner of the mine, the roll arrangement being provided with a rotating outer surface, the rotating axle of which being arranged at least substantially vertical direction, the rotating outer surface guiding the cable past said external corner. An advantage is that preventing or at least decreasing abrasion of the cable may be achieved.

In one embodiment, the rotating outer surface of the roll arrangement comprises a zone having a conical shape tapering in upwards direction. An advantage is that the cable is lifted up and abrasion of the cable may be decreased.

In one embodiment, the arrangement comprised plurality of mine machines, wherein said machines are, in turn, connected to the cable for being driven and charged by the electric energy being supplied by the cable, and in the meanwhile, rest of said plurality of mine machines are operating by electric energy supplied through said cable and charged to the energy storage. An advantage is that one cable reel module takes care of charging of plurality of mine machines working simultaneously.

In one embodiment, the plurality of mine machines comprises mine machines of at least two types. An advantage is that functions performed by the fleet of machines may be expanded.

In one embodiment, the method comprises
- providing plurality of said mine machines,
- connecting said machines are, in turn, to the cable for being driven and charged by the electric energy being supplied by the cable, and in the meanwhile,
- operating rest of said plurality of mine machines by electric energy of supplied through said cable and stored in the energy storage.

An advantage is that one cable reel module takes care of charging of plurality of mine machines working simultaneously.

### BRIEF DESCRIPTION OF FIGURES

Some embodiments illustrating the present disclosure are described in more detail in the attached drawings, in which
Figure 1 is a schematic view of an arrangement and method,
Figure 2 is another schematic view of the arrangement and method, and
Figure 3 is a third schematic view of the arrangement and method.

In the figures, some embodiments are shown simplified for the sake of clarity. Similar parts are marked with the same reference numbers in the figures.

### DETAILED DESCRIPTION

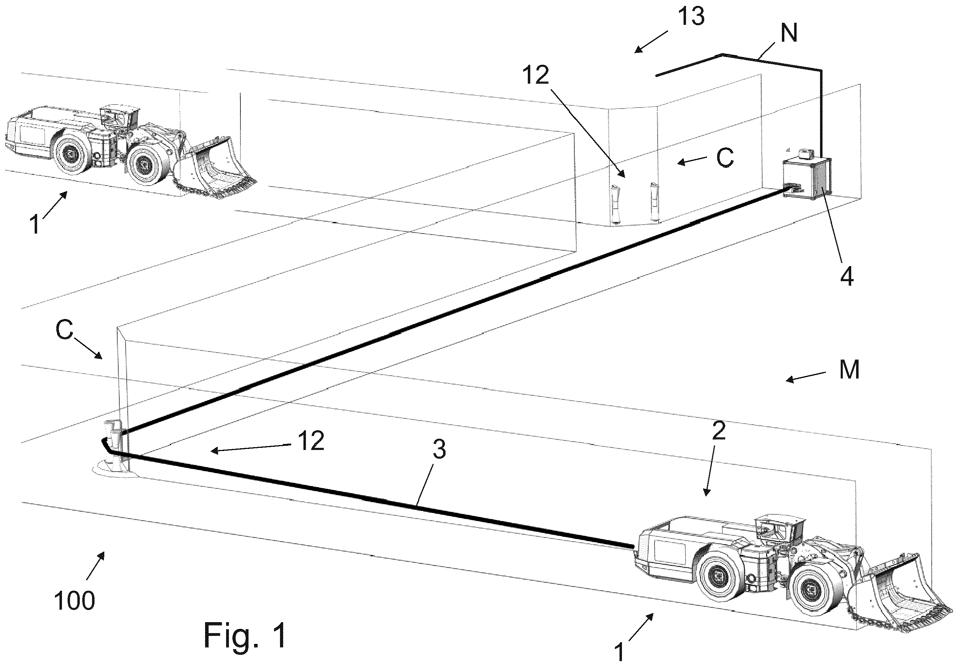

Figure 1 is a schematic view of an arrangement and method. The arrangement 100 is arranged in a mine M. The arrangement 100 comprises at least one electrically operated mine machine 1. The mine machine 1 may be any type of a mining vehicle or a construction vehicle. The mine machine 1 may be provided with one or more working devices for executing designed work tasks at the work site. The mine machine 1 shown in figures is a wheel loader. However, the mine machine may also be a transport vehicle or dumper, a rock drilling rig, a bolting or reinforcing machine or a measuring machine, for example.

The mine machine 1 comprises an energy storage 2 for storing electric energy and having capacity for energizing operations of the mine machine 1. The energy storage 2 may comprise e.g. a battery.

The arrangement 100 comprises a cable 3 for supplying electric energy from an electrical network of the mine N to the energy storage 2 of the mine machine.

The arrangement 100 further comprises a cable reel module 4 that is stationary arranged in the mine. The term "stationary" means here the cable reel module 4 does not move with the mine machine 1.

The cable reel module 4 is provided with an arrangement 5 for electric connection in the electrical network N of the mine. The electrical network N is arranged for supplying and distributing electricity in the mine M.

The cable reel module 4 comprises a frame structure that is suitable for fitting or attaching the module 4 to another module of a module system 10.

The cable reel module 4 is equipped with a cable reel 6 for winding, unwinding and storing of the cable 3. In the embodiment shown in the figures, the rotational axle X of the cable reel 6 is arranged in a vertical position. In another embodiment, the rotational axle is arranged horizontally. The cable reel 6 may be rotated by e.g. electrically, hydraulically or electro-hydraulically. In an embodiment, the power for rotating the cable reel 6 is arranged to come from the power module 17. The rotation may be controlled e.g. by controlling torque.

In an embodiment, the arrangement 100 may comprise two or more cable reel modules 4.

The mine machine 1 is equipped with a cable fixing means 11 that fixes the cable 3 to said machine in a detachable way. "Detachable or detachably" means here that the cable may be removed from the mine machine without breaking or disrupting the cable or the cable fixing means.

The mine machine 1 comprises an electric connector 7 for detachably connecting the cable 3 to the electrical system of the machine. Said system comprises the energy storage 2.

The cable reel module 4 is arranged to provide electric energy via the cable 3 to the mine machine 1 during transfer of said machine 1. The provided electric energy is fed in the electric motor(s) that move(s) the machine and, furthermore, to the energy storage 2 for charging thereof.

In an embodiment, the arrangement 100 comprises a "fleet of machines" 13, i.e. at least two, but preferably even more mine machines 1. Said mine machines 1 may be of similar types, such as a wheel loader shown in Figure 1. Alternatively the fleet of machines comprises mine machines of at least two types, such as wheel loaders and dumpers. The machines of the fleet of machines are, in turn, connected to the cable 3 for being driven and charged by the electric energy supplied by the cable 3, and in the meanwhile, rest of said plurality of mine machines 1 are operating by electric energy discharged from the energy storage 2 of said machine.

In an embodiment, the fleet of machines 13 comprises three mine machines 1 per one cable reel module 4. For instance, typical average power consumption of a 14 ton loader is below 100kw. Provided with an energy storage having nominal capacity of 400kwh, the loader can be operated for four hours. If charging of the energy storage takes two hours, one charging station can take care of three loaders. This way a quick charging is not needed and high power peaks may be avoided. Therefore it is easier to handle power levels in the electrical network N of the mine.

According to an aspect of the invention, the mine machine is used by arranging the cable reel module 4 stationary in the mine M. The electrically operated mine machine 1 is connected to the cable 3 that supplies electric energy from the electrical network of the mine N to the energy storage 2 of said mine machine 1 also during transfer of said machine 1. It is provided electric energy through the cable 3 for energizing said transfer and simultaneously for charging the energy storage 2 of said mine machine 1.

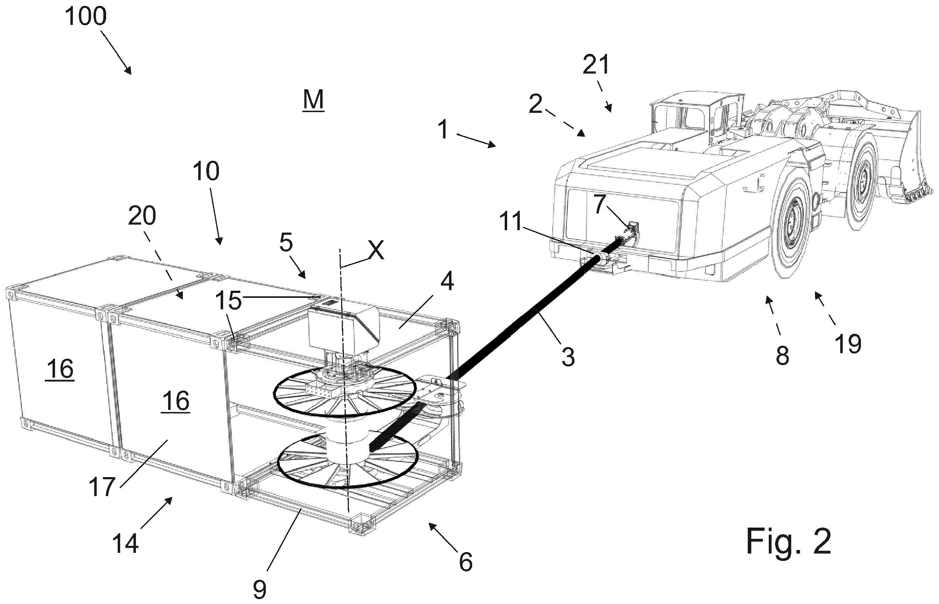

**Figure 2** is another schematic view of the arrangement and method. It is to be noted that the cable reel module 4 is shown without walls.

The cable reel module 4 may be a part of a module system 10 that comprises various functional modules 16. The functional modules 16 may comprise e.g. a power module and a cooling module, for instance. The power module will be described later in this description. The cooling module comprises cooling means that may be arranged to cool other functional modules and/or the mine machine, for example the electrical system of the mine machine.

In an embodiment, the cable reel module 4, as well as other functional modules 16, comprises a frame structure 9 made of e.g. a metal profile. The frame structure 9 may provide attachment points for outer protective plates, as well as components and functional elements arranged inside the module.

In an embodiment, the cable reel module 4 comprises attachment means 14 by which the cable reel module 4 is arranged detachably to the mine M. Said attachment means may comprise e.g. bolts etc.

In an embodiment, the cable reel module 4 comprises module attachment means 15 for attaching the cable reel module 4 detachably to another functional module 16 of the module system 10. Said module attachment means may comprise e.g. bolts and nuts etc. Preferably, all the modules of the module system 10 comprise identical module attachment means 15 that makes it possible to vary freely the configuration of the module system 10.

In an embodiment, the attachment means 14 and the module attachment means 15 allow quick demounting of the cable reel module 4.

In the embodiment shown in Figure 2, the cable reel module 4 is attached to a power module 17, that comprises electrical connections to the electrical network of the mine N and to the cable 3 arranged in the reel module 4. The power module 17 may comprise charging means 20 that transforms the voltage of the network of the mine N into a voltage suitable for the mine machine 1. Thus the charging means may comprise a transformer.

The cable reel module 4 is provided with an arrangement 5 that connects the cable 3 to the electrical connection of the power module 17, or in some embodiments directly to the electrical network N of the mine. This arrangement 5 comprises preferably a quick coupling that allows easy demounting of the cable 3.

The mine machine 1 is equipped with a cable fixing means 11 that attaches detachably the cable 3 to said machine. The cable fixing means 11 carries stresses and loads caused by the cable 3 following the mine machine 1 moving in the mine.

In an embodiment, the cable fixing means 11 comprises a clamp that grips and jams the cable 3. The clamp may be provided with a quick release means allowing quick and easy opening of the clamp.

In an embodiment, the cable fixing means 11 comprises guide rollers arranged to guide the cable 3 during movements of the mine machine 1.

The mine machine 1 comprises an electric connector 7 for detachably connecting the cable 3 to the electrical system 8 of the machine. Said system comprises the energy storage 2 and the electric motor(s) 21. The electric connector 7 is arranged between the cable fixing means 11 and the electrical system 8. Thus the electric connector 7 gets out of the stresses caused by the cable 3 following the mine machine 1.

The mine machine 1 comprises a control unit 19 that monitors and controls use of electric energy received from the cable 3. The control unit 19 controls the consumption of electric energy in the electric motor(s) 21 and charging of the energy storage 2. Thus the control unit 19 is arranged to monitor and control energy used for transferring the machine and for charging the energy storage 2.

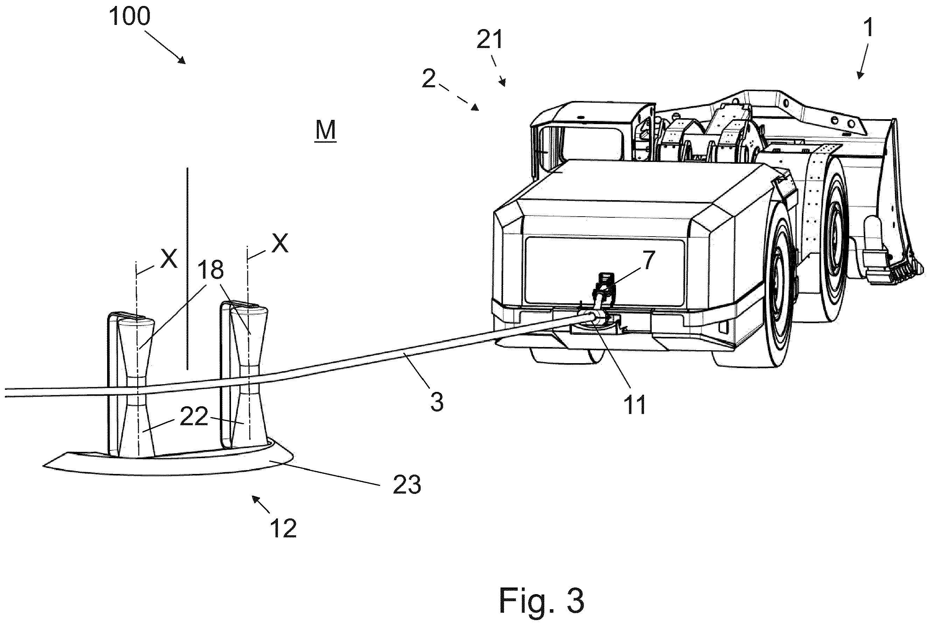

**Figure 3** is a third schematic view of the arrangement and method.

In an embodiment, the arrangement 100 comprises at least one roll arrangement 12 that is arranged in an external corner C of the mine. The roll arrangement 12 is arranged to guide the cable 3 past said external corner C, thus preventing or at least decreasing abrasion of the cable 3 in contacts with the corner.

The roll arrangement 12 shown in Figure 3 is provided with two rotating outer surfaces 18 or rolls, the rotating axle X of which is arranged at least substantially vertical direction. It is to be noted, however, that the roll arrangement 12 may also comprise just one rotating outer surfaces, or three or even more rotating outer surfaces.

In an embodiment, the rotating outer surface 18 comprises a zone 22 having a conical shape tapering in upwards direction. The conical shape lifts the cable 3 up and at least some portions thereof away from floor of the mine. This may decrease abrasion of the cable even further.

In an embodiment, the roll arrangement 12 comprises a guide element 23 that has a guiding or slanting surface for lifting the cable 3 upwards to the roll(s).

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### REFERENCE SYMBOLS

- 1: mine machine
- 2: energy storage
- 3: cable
- 4: cable reel module
- 5: arrangement for electric connection
- 6: cable reel
- 7: electric connector
- 8: electrical system of the mine machine
- 9: frame structure of the cable reel module
- 10: module system
- 11: cable fixing means
- 12: roll arrangement
- 13: fleet of machines
- 14: attachment means of the cable reel module
- 15: module attachment means
- 16: functional module
- 17: power module
- 18: outer surface
- 19: control unit
- 20: charging means
- 21: drive motor
- 22: conical zone
- 23: guide element

- 100: arrangement

- C: corner
- M: mine
- N: electrical network of the mine
- X: rotating axle

## Claims

1. An arrangement (100) in a mine, comprising:
- an electrically operated mine machine (1), comprising
- an energy storage (2) for storing electric energy and having capacity for energizing operations of the mine machine (1), the arrangement (100) further comprising:
- a cable (3) for supplying electric energy from an electrical network of the mine (N) to the energy storage (2),
- an electric connector (7) arranged in the mine machine (1) for detachably connecting the cable (3) to an electrical system (8) of the mine machine (1), the arrangement (100) further comprising
- a cable reel module (4) that is stationary arranged in the mine, provided with an arrangement (5) for electric connection in the electrical network of the mine (N) and equipped with a cable reel (6) for winding, unwinding and storing of the cable (3), the cable reel module (4) comprising a frame structure (9) suitable for fitting said module (4) to another module of a module system (10), that
- the mine machine (1) is equipped with a cable fixing means (11) for detachably fixing the cable (3) to said machine, and
- the cable reel module (4) being arranged to provide electric energy for the mine machine (1) during transfer of said machine (1) for energizing said transfer and for charging the energy storage (2) of said mine machine (1).

2. The arrangement as claimed in claim 1, wherein the mine machine (1) is a wheel loader, a transport vehicle or dumper, a rock drilling rig, a bolting or reinforcing machine or a measuring machine.

3. The arrangement as claimed in any of the preceding claims, wherein the cable reel module (4) is provided with an arrangement (5) for electric connection of the cable to the electrical network (N) of the mine.

4. The arrangement as claimed in any of the preceding claims, wherein the cable reel module (4) comprises attachment means (14), by which the cable reel module (4) is arranged detachably to the mine.

5. The arrangement as claimed in claim 4, wherein the attachment means (14) comprises module attachment means (15) for attaching the cable reel module (4) detachably to another functional module (16) in the mine.

6. The arrangement as claimed in any of the preceding claims, wherein charging means transforming the voltage suitable for the mine machine (1) is arranged in a power module (17), that comprises electrical connections to the electrical network of the mine (N) and the cable (3) arranged in the reel module (4).

7. The arrangement as claimed in any of the preceding claims, wherein the cable fixing means (11) comprises a clamp arranged to grip and jam the cable (3).

8. The arrangement as claimed in any of the preceding claims, comprising at least one roll arrangement (12) arranged in an external corner (C) of the mine, the roll arrangement (12) being provided with a rotating outer surface (18), the rotating axle (X) of which being arranged at least substantially vertical direction, the rotating outer surface (18) guiding the cable (3) past said external corner (C).

9. The arrangement as claimed in claim 8, wherein the rotating outer surface (18) comprises a zone having a conical shape tapering in upwards direction.

10. The arrangement as claimed in any of the preceding claims, comprising
- plurality (13) of said mine machines, wherein said machines are, in turn, connected to the cable (3) for being driven and charged by the electric energy being supplied by the cable (3), and in the meanwhile, rest of said plurality of mine machines (1) are operating by electric energy supplied through said cable (3) and charged to the energy storage (2).

11. The arrangement as claimed in claim 10, wherein the plurality (13) of mine machines comprises mine machines of at least two types.

12. An electrically operated mine machine, comprising
- an energy storage (2) for storing electric energy and having capacity for energizing at least mobility operations of the mine machine (1),
- an electric connector (7) for detachably connecting a cable (3) for supplying electric energy from an electrical network of the mine (N) to the energy storage (2), wherein the electrically operated mine machine further comprises
- a cable fixing means (11) for detachably fixing the cable (3) to the mine machine, and for carrying stresses caused by the cable (3) to the mine machine (1) during transfer of said mine machine, and
- a control unit (19) arranged to guide electric energy received from the cable (3) during said transfer for energizing said transfer and for charging the energy storage (2) .

13. The mine machine as claimed in claim 12, being a wheel loader, a transport vehicle or dumper, a rock drilling rig, a bolting or reinforcing machine or a measuring machine.

14. A method for using a mine machine, the method comprising:
- arranging a cable reel module (4) stationary in a mine, the cable reel module (4) provided with an arrangement (5) for electric connection in the electrical network of the mine (N) and equipped with a cable reel (6) for winding, unwinding and storing of a cable (3),
- connecting an electrically operated mine machine (1) to the cable (3),
- supplying electric energy from the electrical network of the mine (N) to an energy storage (2) of said mine machine (1) by said cable (3), and
- during transfer of said machine (1), providing electric energy through the cable (3) for energizing said transfer and for charging the energy storage (2) of said mine machine (1).

15. The method as claimed in claim 14, comprising
- providing plurality of said mine machines (1),
- connecting said machines are, in turn, to the cable (3) for being driven and charged by the electric energy being supplied by the cable (3), and in the meanwhile,
- operating rest of said plurality of mine machines (1) by electric energy of supplied through said cable (3) and stored in the energy storage (2).
